# EUROPÄISCHE PATENTANMELDUNG

(11) **EP 0 562 310 A1**
(43) Veröffentlichungstag der Anmeldung: **29.09.1993**
(21) Anmeldenummer: 93103319.5
(22) Anmeldetag: 02.03.1993
(51) Int. Cl.: A47J 43/27, A47G 19/22

(54) **Trinkgefäss**

(30) Priorität: 26.03.1992 DE 4209899
(71) Anmelder: Schindlegger, Walter, A-3353 Seitenstetten (AT)
(72) Erfinder: Schindlegger, Walter, A-3353 Seitenstetten (AT)
(74) Vertreter: Haft, von Puttkamer, Berngruber, Czybulka

(57) **Zusammenfassung**

Ein Trinkgefäß (1) weist ein Rührwerkzeug (19) auf, das an einer sich durch den Boden (2) des Trinkgefäßes erstreckenden Rührerwelle (4) befestigt ist.

## Beschreibung

Die vorliegende Erfindung bezieht sich auf ein Trinkgefäß mit einem an einer Rührerwelle befestigten Rührwerkzeug. Das Trinkgefäß kann z. B. eine Tasse, ein Trinkglas, ein Becher oder eine Babyflasche sein.

Zum Verdünnen konzentrierter Säfte, Mixen von Cocktails, Auflösen von Zucker in Kaffee oder Tee oder zum Vermischen von Kaffee und Tee mit Milch, Zitronensaft oder anderen Flüssigkeiten, verwendet man heutzutage im allgemeinen einen Löffel. Das hat den Nachteil, daß dem Trinkgefäß immer ein Löffel beigelegt werden muß. Bei Getränken, die schwere Bestandteile enthalten, z. B. Fruchtfleisch, muß man nicht nur einmal, sondern wiederholt mit dem Löffel umrühren. Dies ist umständlich und vor allem dann lästig, wenn man z. B. bei einer Stehparty in einer Hand das Trinkgefäß und in der anderen z. B. einen Teller hält.

Zum Mischen von Getränken ist aus US-A-1,174,828 ein Gefäß mit einem Deckel bekannt, durch den eine manuell betätigbare Rührerwelle mit einem Rührwerkzeug ragt. Um aus diesem Gefäß trinken zu können, müßte man also den Deckel mit dem Rührer abnehmen und irgendwo ablegen, wo er abtropfen kann, beispielsweise in einen Ausguß. Dieses Gefäß ist also nur sehr beschränkt als Trinkgefäß einsetzbar, nämlich nur dort, wo eine solche Abtropfmöglichkeit besteht. Auch ist die Reinigung relativ aufwendig, da sowohl das Gefäß wie der Deckel mit dem Rührwerkzeug gereinigt werden müssen.

Aus CH-A-142108 geht ein Trinkgefäß für moussierende Getränke, wie Bier, hervor, in dessen Boden eine mit Kohlendioxid füllbare Druckkammer mit einem Zufluß des Kohlendioxids in das Gefäßinnere vorgesehen ist. Das bekannte Gefäß ist also nur für kohlendioxidhaltige Getränke, nicht aber beispielsweise für Kaffee oder Milch geeignet. Nach DE-U-91 14 980 ist an einer Tasse ein Pfeifinstrument vorgesehen, dessen Luftröhre sich vom Henkel der Tasse nach unten zum Tassenboden erstreckt.

Aufgabe der Erfindung ist es, ein leicht zu reinigendes Trinkgefäß mit einer wirksamen Rühreinrichtung bereitzustellen. Dies wird erfindungsgemäß mit dem im Anspruch 1 gekennzeichneten Trinkgefäß erreicht. In den Unteransprüchen sind vorteilhafte Ausgestaltungen der Erfindung wiedergegeben.

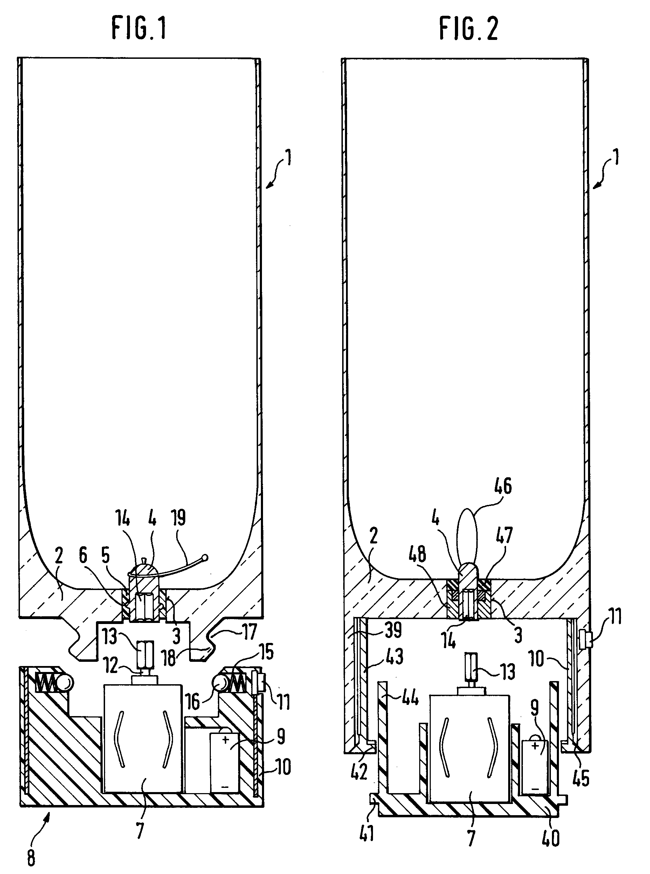

Nachstehend ist die Erfindung anhand der Zeichnung näher erläutert. Darin zeigen Fig. 1 bis 4 im Längsschnitt jeweils eine andere Ausführungsform des erfindungsgemäßen Trinkgefäßes.

Gemäß Fig. 1 ist das Trinkgefäß 1 als Trinkglas ausgebildet. Im Boden 2 des Trinkgefäßes 1 ist in der Mitte eine Axialbohrung 3 vorgesehen, in der die Rührerwelle 4 drehbar gelagert ist.

Die Lagerung der Rührerwelle 4 erfolgt durch einen hülsenförmigen Lagerring 5, welcher vorzugsweise aus einem gummielastischen Material mit glatter Innenfläche besteht, so daß zwischen dem Lagerring 5 und der Rührerwelle 4 nur eine geringe Gleitreibung besteht. Das gummielastische Material des Lagerrings 5 dichtet zugleich die Rührerwelle 4 ab. Die Hülse 5 kann beispielsweise aus EPDM bestehen. Damit die Rührerwelle 4 im Lagerring 5 in axialer Richtung gesichert ist, weist sie einen ringförmigen Vorsprung 6 auf, der in eine entsprechende Ringnut in der Innenfläche des Lagerrings 5 eingreift.

Die Rührerwelle 4 ist durch einen Elektromotor 7 antreibbar, der in einem Unterteil 8 angeordnet ist. Der Elektromotor 7 wird von einer Batterie 9 mit Strom versorgt, die bei der dargestellten Ausführungsform als Akkumulatorbatterie ausgebildet ist, die durch eine Solarzelle 10 aufgeladen wird. Zur Betätigung des Elektromotors 7 ist beispielsweise ein als Druckknopf ausgebildeter Schalter 11 vorgesehen. Die elektrischen Verbindungen zwischen dem Elektromotor 7, der Batterie 9, der Solarzelle 10 und dem Schalter 11 sind in Fig. 1 nicht dargestellt.

Die als Folie ausgebildete Solarzelle 10 ist am Außenumfang des beispielsweise zylindrisch ausgebildeten Unterteils 8 in einer entsprechenden Umfangsnut im Unterteil 8 nahe dessen Außenseite angeordnet. Das Material, das die Solarzelle 10 nach außen abdeckt, muß dazu lichtdurchlässig sein, also beispielsweise aus einem lichtdurchlässigen Kunststoff, wie Acrylglas, bestehen. Die Solarzelle 10 kann sich praktisch um den gesamten Außenumfang des zylindrischen Unterteils 8 erstrecken, mit einer Ausnehmung im Bereich des Schalters 11. Zur Kupplung der Antriebswelle 12 des Elektromotors 7 mit der Rührerwelle 4 ist auf der Rührerwelle 4 ein Vier- oder sonstiger Außenmehrkantzapfen 13 befestigt, der in eine entsprechende Innenmehrkantausnehmung 14 in der Rührerwelle 4 steckbar ist.

Um die Motorantriebswelle 12 und die Rührerwelle 4 in der gekuppelten Stellung zu halten, ist das Trinkgefäß 1 auf das Unterteil 8 abstellbar und mit diesem verriegelbar ausgebildet. Dazu können an dem Unterteil 8 nach innen z. B. mit Druckfedern 15 belastete Rastkugeln 16 oder sonstige federbelastete Rastkörper vorgesehen sein, die in eine Nut 17 eingreifen, die an der Außenseite eines sich vom Boden 2 des Trinkgefäßes 1 nach unten erstreckenden ringförmigen Vorsprungs 18 vorgesehen ist.

Als Rührwerkzeug ist ein Draht oder Faden 19, beispielsweise aus Nylon oder dergleichen Kunststoff, vorgesehen, der mit einem Ende an der Rührerwelle 4 befestigt ist. Es hat sich gezeigt, daß ein solcher relativ kurzer Faden 19 von 5 cm oder weniger sich besonders gut zum Verrühren von pulverförmigen Stoffen eignet, die zum Verklumpen neigen, wie Kakaopulver, Proteingranulat usw., und zwar bildet sich beim Rühren mit dem Faden 19 ein Strudel aus, der das Pulver nach unten saugt und etwaige Klumpen zertrümmert. Zugleich lassen sich mit einem Faden 18 als Rührwerkzeug sehr hohe Tourenzahlen mit relativ geringem Energieaufwand erzielen. Der Elektromotor 7 sollte eine Drehzahl von mindestens 1000 Umdrehungen pro Minute aufweisen, vorzugsweise liegt die Drehzahl jedoch bei 8000 Umdrehungen pro Minute und mehr.

Das Trinkgefäß 1 kann mit eingebauter Rührerwelle 4 und dem Rührwerkzeug 19 in einer Geschirrspülmaschine gereinigt werden. Auch kann das Getränk in dem Trinkgefäß 1 vor oder nach dem Rühren in einem Mikrowellenofen erwärmt werden.

Wenn beispielsweise eine Intensivreinigung vorgenommen werden soll, kann der Dicht- und Lagerring 5 mit der Rührerwelle 4 und dem Rührwerkzeug 19 auch aus der Bohrung 3 im Boden 2 des Gefäßes 1 herausgedrückt werden.

Das erfindungsgemäße Trinkgefäß kann beispielsweise zum Vermengen von Kaffee oder Tee mit Zucker, zum Verhindern der Bildung einer Milchhaut bei Milch, Kakao, Kaffee und Tee, zum Herstellen von Fruchtmilchsorten, zum Auflösen von Instanttee, Löskaffee oder Kakaopulver, zum Rühren frisch gepreßter Säfte oder zur Herstellung von Eiflüssigkeiten-Emulsionen verwendet werden. Auch können mit ihm Proteingranulate oder Eiweißpulver vermischt und Instantdrinks, isotonische Getränke, Milchshakes, Gemüsesäfte und dergleichen verrührt werden. Insbesondere wenn Frucht-Milchgetränke hergestellt werden, kann das Rührwerk auch als Messer ausgebildet sein, das die Früchte, wie Erdbeeren oder Bananenstücke, zugleich zerteilt.

Das erfindungsgemäße Trinkgefäß kann insbesondere auch als Babyflasche ausgebildet sein. Das Unterteil 8 kann dann in einer Babyflaschenerwärmeinrichtung angeordnet sein. D. h., das Unterteil 8 kann am Boden eines Gefäßes angebracht werden, das mit einer elektrischen Heizeinrichtung versehen ist und als Wasserbad zum Erwärmen des Babyflascheninhalts dient. Damit die Babyflasche so zentriert wird, daß der Zapfen 13 in die Ausnehmung 14 eingreift, kann um die Motorwelle ein kegelförmiger oder dergleichen sich nach oben verjüngender Vorsprung vorgesehen sein, der in eine entsprechend ausgebildete Innenwand des ringförmigen Vorsprungs 18 am Boden 2 eingreift.

Statt eines Motors kann zum Antrieb der Rührerwelle 4 auch ein aufziehbarer Federantrieb vorgesehen sein. Ferner kann das Unterteil 8 mit einem Musikwerk oder dergleichen akustischen Anzeigevorrichtung versehen sein. Mit einer Zeitschalteinrichtung kann der Motor bzw. Federantrieb und die akustische Vorrichtung zugleich betätigt werden, und zwar einen vorgegebenen Zeitraum lang. Auf diese Weise wird akustisch angezeigt, wann das Mischen des Inhalts des Trinkgefäßes 1 beendet ist.

Die Ausführungsform nach Fig. 2 unterscheidet sich von derjenigen nach Fig. 1 im wesentlichen dadurch, daß das Trinkgefäß 1 einen zylinderförmigen Fuß 39 aufweist, der den gleichen Außendurchmesser wie das Trinkgefäß 1 aufweist und das Unterteil 40 aufnimmt. D. h., das Unterteil 40 wird, wie in Fig. 2 dargestellt, in den Fuß 39 gesteckt und im eingeschobenen Zustand z. B. mittels eines Bajonett-Verschlusses mit dem Fuß 39 verriegelt. Dazu sind am Umfang des Unterteils 40 im unteren Bereich Nasen 41 vorgesehen, die mit dem mit nicht dargestellten Ausnehmungen versehenen Ringabschnitt 42 an der Innenseite einer Hülse 43 zusammenwirken, die an der Innenseite des Fußes 39 befestigt ist.

Statt des Bajonett-Verschlusses kann das Unterteil 40 auch in den Fuß 39 einschraubbar sein.

Das Unterteil 40 nach Fig. 2 weist eine zylindrische Umfangswand 44 auf, ferner in der Mitte eine Ausnehmung für den Motor 7. Zwischen der Umfangswand 44 und dem Motor 7 sind eine oder mehrere Batterien 9 vorgesehen.

Zwischen der Hülse 43 und dem Fuß 39 ist die als Folie ausgebildete Solarzelle 10 angeordnet.

Die Hülse 43 kann an den Fuß 39 z. B. angeklebt sein. Damit eine hinreichend große Klebefläche erhalten wird, liegen der Fuß 39 und die Hülse 43 an der unteren Kante über Konusflächen 45 aneinander an.

Nicht dargestellte Kontakte verbinden den Schalter 11 und die die Solarzelle 10 mit dem Motor 7 und der Batterie 9. Der Rührfaden 46 ist nach Fig. 2 als geschlossene Schleife ausgebildet.

Das Lager für die Rührerwelle 4 ist nach Fig. 2 zweiteilig ausgebildet, und zwar aus einem Dichtungsring 47 und einem darunter angeordneten Lagerring 48. Anstelle des Gleitlagers mit dem Lagerring 48 kann auch ein Wälzlager vorgesehen sein.

Statt am Umfang des Fußes 39 kann die Solarzelle 10 auch an der Unterseite des Bodens 2 angebracht sein, wenn das Trinkgefäß 1 in diesem Bereich lichtdurchlässig ist. Die Batterien 9 können statt mit der Solarzelle 10 auch mit einem Ladegerät aufgeladen werden.

Statt des Schalters 11 kann ein Schalter vorgesehen sein, der betätigt wird, wenn man auf das vorher zweckmäßigerweise mit einem Deckel verschlossene Trinkgefäß 1 von oben drückt.

Statt des Motors 7 in einem separaten Unterteil 40 kann der Motor 7 auch fest mit dem Trinkgefäß verbunden sein. In diesem Fall ist die Motorwelle zugleich die Rührerwelle.

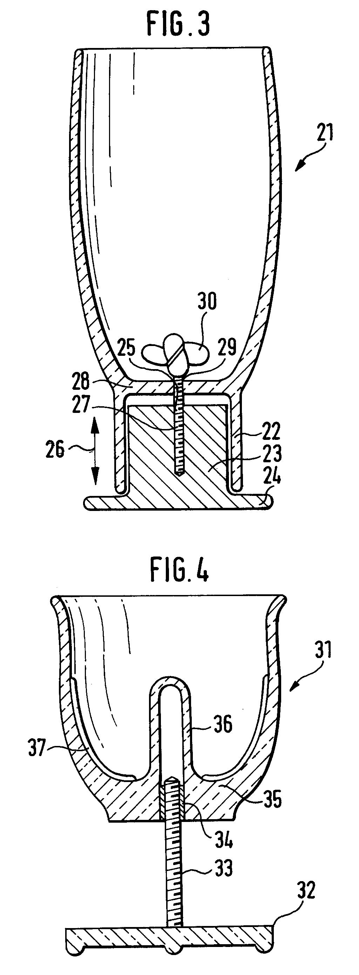

Gemäß Fig. 3 weist das Trinkgefäß 21 einen hohlzylindrischen Fuß 22 auf, in dem ein sich nach unten aus dem Fuß 22 herausbewegbares zylindrisches Teil 23 angeordnet ist, das unten mit einer Standplatte 24 versehen ist, die sich seitlich über den hohlzylindrischen Fuß 3 hinaus erstreckt.

Das Teil 23 ist in dem Fuß 22 durch eine nicht dargestellte Nase am Fuß, die in eine Nut im Teil 23 eingreift, oder einen anderen Formschluß verdrehungssicher im Fuß 22 verschiebbar angeordnet.

Das Teil 23 ist mit einem Innengewinde 25 versehen, das sich in der durch den Pfeil 26 wiedergegebenen Bewegungsrichtung des Teiles 23 erstreckt, und zwar in der Längsachse des Trinkgefäßes 21. In das Innengewinde 25 greift eine Gewindespindel 27 ein, die durch den aus dem Boden 28 nach unten ragenden Teil der Rührerwelle 29 gebildet wird, auf der ein Propeller 30 als Rührwerkzeug sitzt.

Das Gewicht des Teiles 23 ist so bemessen, daß es sich beim Anheben des Trinkgefäßes 21 von einer Standfläche nach unten bewegt. Auch kann eine in der Zeichnung nicht dargestellte Feder vorgesehen sein, die das Teil 23 nach unten drückt. Dadurch wird die Spindel 27 und damit der Propeller 30 in Drehung versetzt, wodurch die in dem Trinkgefäß 1 vorhandene, in der Zeichnung nicht dargestellte Flüssigkeit durchmischt wird. Wenn das Teil 23 nach dem Anheben seine untere Endstellung erreicht hat und das Trinkgefäß 21 erneut abgestellt wird, wird der Propeller 30 nochmals in Umdrehung versetzt, bis das Teil 23 seine in der Zeichnung dargestellte obere Endstellung erreicht, in der die Standplatte 24 an dem Fuß 22 anliegt.

Statt der Gewindespindel 27 an der Rührerwelle 29 kann das Teil 23 auch ein Außengewinde aufweisen, das in ein entsprechendes Innengewinde im hohlzylindrischen Fuß 22 eingreift. Bei dieser in der Zeichnung nicht dargestellten Ausführungsform ist dann die Rührerwelle 29 im Teil 23 in Axialrichtung verschiebbar, jedoch verdrehungssicher angeordnet.

Bei der Ausführungsform nach Fig. 4 ist ein platten- oder scheibenförmiger Fuß 32 vorgesehen, von dem sich in der Mitte eine Gewindespindel 33 senkrecht nach oben erstreckt. Die Gewindespindel 33 greift in die mit einer Mutter 34 versehene als Hohlwelle ausgebildete Rührerwelle 36 ein, die an der sich vom Boden 35 des Trinkgefäßes 31 nach oben erstreckenden Hülse befestigt ist. Wenn die Spindel 33 aus der Mutter 34 herausgeschraubt ist, wie in Fig. 3 dargestellt, und der Fuß 32 auf eine Unterlage gestellt wird, führt das Gewicht des Trinkgefäßes 31 mit der darin enthaltenen, nicht dargestellten Flüssigkeit dazu, daß sich das Trinkgefäß 31 unter Rotation nach unten bewegt, wodurch in dem Trinkgefäß 31 Zentrifugalkräfte auftreten, die zu einer Vermischung des Inhalts des Trinkgefäßes 31 führen. Als Rührwerkzeug können z. B. Rippen 37 an der Innenseite des Trinkgefäßes 31 vorgesehen sein.

Das Gewicht des Fußes 32 und der Spindel 33 können so bemessen sein, daß sich der Fuß 32 von selbst in die in Fig. 4 dargestellte herausgeschraubte Position bewegt, wenn das Trinkgefäß 31 angehoben wird.

In Weiterbildung der Ausführungsform nach Fig. 4 kann ein Freilauf vorgesehen sein, durch den der Fuß 32 beim Hochheben des Trinkgefäßes 31 nach unten bewegbar ist, ohne sich zu drehen.

Bei den vorstehend geschilderten Ausführungsformen ragt die Rührerwelle durch den Boden in das Innere des Trinkgefäßes.

Stattdessen kann sich die Rührerwelle auch durch eine Seitenwand in das Rührgefäß erstrecken.

## Patentansprüche

1. Trinkgefäß (1, 21, 31) mit eingebauter Rührerwelle (4, 29, 36) mit einem Rührwerkzeug, dadurch gekennzeichnet, daß die Rührerwelle (4, 29, 36) durch den Boden (2, 28, 35) oder eine Seitenwand des Trinkgefäßes (1, 21, 31) ragt.

2. Trinkgefäß nach Anspruch 1, dadurch gekennzeichnet, daß die Rührerwelle (4) durch einen Motor (7) oder einen aufziehbaren Federantrieb antreibbar ist.

3. Trinkgefäß nach Anspruch 2, dadurch gekennzeichnet, daß eine Kupplung zum Verbinden der Antriebswelle (12) des Motors (7) bzw. des Federantriebs mit der Rührerwelle (4) vorgesehen ist.

4. Trinkgefäß nach Anspruch 2 oder 3, dadurch gekennzeichnet, daß der Motor (7) oder Federantrieb in einem Unterteil (8, 40) angeordnet ist, das mit dem Trinkgefäß (1) zum Kuppeln der Antriebswelle (12) mit der Rührerwelle (4) lösbar verbindbar ist.

5. Trinkgefäß nach Anspruch 3 oder 4, dadurch gekennzeichnet, daß zum Kuppeln der Antriebswelle (12) mit der Rührerwelle ein Außenmehrkantzapfen (13) und eine Innenmehrkantausnehmung (14) an der Antriebswelle (12) bzw. der Rührerwelle (4) vorgesehen sind.

6. Trinkgefäß nach einem der Ansprüche 3 bis 5, dadurch gekennzeichnet, daß zum Verbinden des Unterteils (8) mit dem Trinkgefäß (1) ein sich vom Boden (2) des Trinkgefäßes (1) nach unten erstreckender Ring (18) mit einer Nut (17) an der Außenseite vorgesehen ist, in die am Unterteil (8) vorgesehene federbelastete Rastkörper (16) eingreifen.

7. Trinkgefäß nach einem der Ansprüche 3 bis 5, dadurch gekennzeichnet, daß das Trinkgefäß (1) einen Fuß (39) aufweist, der das Unterteil (40) aufnimmt, wobei das Unterteil (40) durch einen Bajonett-Verschluß oder Verschrauben mit dem Fuß (39) verbindbar ist.

8. Trinkgefäß nach einem der Ansprüche 3 bis 6, dadurch gekennzeichnet, daß der Motor (7) ein durch eine Solarzelle (10) mit Strom versorgter Elektromotor ist, wobei die Solarzelle (10) am Umfang des Unterteils (8) oder des Fußes (39) des Trinkgefäßes (1) angeordnet ist.

9. Trinkgefäß nach einem der vorstehenden Ansprüche, dadurch gekennzeichnet, daß das Rührwerkzeug durch einen Faden (18), Propeller (30), Rippen (37) oder Messer gebildet wird.

10. Trinkgefäß nach Anspruch 1, dadurch gekennzeichnet, daß das Trinkgefäß (21) einen Fuß (22) aufweist, in dem ein nach unten herausbewegbares Teil (23) verdrehungssicher angeordnet ist, wobei das herausbewegbare Teil (23) ein Gewinde (25) aufweist, in das eine Gewindespindel (27) eingreift, die durch den den Boden (28) des Trinkgefäßes (21) durchragenden Abschnitt der Rührerwelle (29) gebildet wird.

11. Trinkgefäß nach Anspruch 10, dadurch gekennzeichnet, daß das Teil (23) ein solches Gewicht besitzt oder durch eine Feder so belastet ist, daß es sich beim Heben des Trinkgefäßes (21) von selbst nach unten bewegt.
